(19) Europäisches Patentamt
European Patent Office
Office européen des brevets

(11) **EP 4 502 874 A1**

(12) **EUROPEAN PATENT APPLICATION**

(43) Date of publication:
05.02.2025 Bulletin 2025/06

(51) International Patent Classification (IPC):
*G06N 10/60* (2022.01)  *G06N 10/20* (2022.01)

(21) Application number: 23188760.5

(52) Cooperative Patent Classification (CPC):
G06N 10/60; G06N 10/20

(22) Date of filing: 31.07.2023

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Terra Quantum AG**
**9000 St. Gallen (CH)**

(72) Inventors:
• **MELNIKOV, Artem**
**9000 St. Gallen (CH)**
• **TERMANOVA, Alena**
**9000 St. Gallen (CH)**
• **PERELSHTEIN, Michael**
**9000 St. Gallen (CH)**

(74) Representative: **Kretschmann, Dennis**
**Boehmert & Boehmert**
**Anwaltspartnerschaft mbB**
**Pettenkoferstraße 22**
**80336 München (DE)**

(54) **A METHOD AND SYSTEM FOR ENCODING AN INTENDED MATRIX IN A QUANTUM CIRCUIT**

(57) A computer-implemented method for encoding an intended matrix in a quantum circuit, the method comprising obtaining an MPO representation of the intended matrix; determining an approximation rank for the intended matrix based on the MPO representation; determining an initial guess for an orthogonal approximation of the intended matrix in the form of a tensor network with isometric sub-tensors of the approximation rank; starting with the initial guess, iteratively optimizing the orthogonal approximation of the intended matrix based on an optimization algorithm minimizing a cost function subject to an isometry constraint for the isometric sub-tensors, wherein the cost function attributes a cost to the orthogonal approximation of the intended matrix based on a quality of the orthogonal approximation with respect to the intended matrix, and encoding the orthogonal approximation into a quantum circuit based on encodings of the isometric sub-tensors into quantum gates.

Fig. 4

EP 4 502 874 A1

**Description**

FIELD OF THE INVENTION

The present invention is in the field of encoding of computational operations into quantum circuits. More precisely, the present invention relates to a computer implemented optimization of an intended computational operation for encoding in a quantum circuit.

BACKGROUND

Quantum computers provide a platform of controllable quantum mechanical systems whose state and interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In essence, the operation of a quantum computer may be considered to rely on the encoding of a starting state into the internal quantum state of the qubits, followed by a multiplication of the internal quantum state of the qubits with a matrix, which can be implemented by a combination of different quantum gates, and a measurement of the resulting outcome.

In order to compute solutions to problems which are considered intractable on classical computers, a quantum computer can leverage the special properties of quantum mechanical states, in particular the superposition and entanglement of different quantum states, to find solutions with a comparatively low number of calculation steps. Moreover, since the quantum operations can create complex superposition states of the qubits, a quantum computer in principle has access to a large internal memory for processing computational states. However, as found by Shende et al. ("Minimal universal two-qubit controlled-not-based circuits"; Phys. Rev. A, 69:062321, Jun 2004) translating an arbitrary operation into a combination of single- and two-qubit gates generally requires an exponential number of operations with respect to the number of qubits.

Lubasch et al ("Variational quantum algorithms for nonlinear problems") teach solving nonlinear differential equations by variational quantum computing. The outputs of quantum variational circuits are combined by a quantum nonlinear processing unit, and a comparison is made to an MPS ansatz, in which a Hamiltonian representable as an MPS is encoded as a quantum circuit according to an MPS quantum circuit encoding scheme.

SUMMARY OF THE INVENTION

However, current approaches are still limited by the significant complexity involved in implementing the respective steps of state encoding in qubits, matrix encoding through quantum gates and measurement. Specifically, the exponential complexity of decomposing arbitrary multi-qubit gates with respect to the number of qubits, combined with the need for full connectivity between qubits, presents a significant obstacle. Although algorithms exist, which translate a large matrix into a combination of single quantum gates and two-qubit operations (e.g. CNOT gates), the complexity of the resulting circuit generally scales exponentially with the number of qubits. Using Hamiltonians representable as an MPS constrains the applicable problem instances for the algorithm, while variational approaches often rely on many quantum circuit evaluations for optimizing the variational quantum circuit.

In view of this state-of-the-art, the object of the invention is to provide a computer-implemented method for determining a matrix encoding of an intended computational operation and a corresponding system, wherein the encoded operation can closely approximate the desired computational operation, but can also be implemented efficiently on quantum hardware.

This object is solved by a method and a system according to the independent claims. The dependent claims relate to preferred embodiments.

According to a first aspect, the invention relates to a computer-implemented method for encoding an intended matrix in a quantum circuit. The method comprises obtaining a matrix product operator representation of the intended matrix, and determining an approximation rank for the intended matrix based on the MPO representation. The method further comprises determining an initial guess for an orthogonal approximation of the intended matrix in the form of a tensor network with isometric sub-tensors of the approximation rank, and starting with the initial guess, iteratively optimizing the orthogonal approximation of the intended matrix based on an optimization algorithm minimizing a cost function subject to an isometry constraint for the isometric sub-tensors. The cost function attributes a cost to the orthogonal approximation of the intended matrix based on a quality of the orthogonal approximation with respect to the intended matrix. The method further comprises encoding the orthogonal approximation into a quantum circuit based on encodings of the isometric sub-tensors into quantum gates.

The intended matrix may codify an intended multi qubit operation, which may act on an input state of the computation qubits of a quantum processing system. It is noted that although the intended matrix is considered as a multi-qubit operation, for the method according to the first aspect it is not necessary that the intended matrix is unitary. For example, a frequently used matrix in the context of quantum computing algorithms is the Laplace matrix $M_L$, e.g. in the solution of partial differential equations. As another example, the diagonal matrix $M_D$ may be used as part of an optimization algorithm.

A common property of these two exemplary intended matrices, when considered as quantum operators, is that they possess comparatively small entanglement, and/or that these matrices can be described by a Tensor Network with comparatively small rank, i.e. a rank of two and three for the diagonal matrix and the Laplace Operator, respectively.

The method according to the first aspect leverages this property by initially obtaining a tensor network representation of the intended matrix, in particular in the form of a Tensor train, which can have a comparatively small bond dimension. The matrix product operator representation/approximation of a general intended matrix however does not have a direct correspondence to a quantum circuit which can be determined without exponential computational difficulty. Rather, based on the matrix product operator representation of the intended matrix, an approximation rank is determined, which should be equal to or greater than the rank of the Tensor train representation, for approximating the intended matrix with the orthogonal approximation.

In preferred embodiments, the approximation rank is greater than a rank of the matrix product operator representation of the intended matrix, wherein the rank of the matrix product operator representation is in particular a bond dimension of the matrix product operator representation.

Since the orthogonal approximation relies on the constraint of isometric sub-tensors, the increased rank of the orthogonal approximation may increase the degrees of freedom for accurately approximating the intended matrix.

It is noted that an accurate matrix product operator representation may be determined for some matrices, but generally the matrix product operator representation may be obtained by an approximation algorithm, such as cross approximation or an algorithm based on singular value decomposition, for approximating the intended matrix with an MPO without significantly affecting the outcome of the method. The skilled person will further appreciate that the matrix product operator representation/approximation may already be known, and it may be sufficient to receive a matrix product operator representation from a suitable source.

The MPO representation may comprise non-isometric sub-tensors, and may approximate the intended matrix with an error which may be smaller than 1%, or smaller than $10^{-6}$, e.g. depending on the application, and may also be called a non-orthogonal MPO approximation of the intended matrix. For example, for solving optimization problems, an approximation of the intended matrix with an error of about 1% may be sufficient, while for the solution of PDE problems, the intended matrix may be approximated with an error of $10^{-5}$ or smaller. The skilled person will appreciate that not any matrix may be represented by an MPO representation with arbitrarily small accuracy, but the skilled person may still choose to apply the method in view of the increased inaccuracy of the MPO approximation, e.g. if no other way of performing the computation is possible, or if the comparatively low accuracy is sufficient for the respective computational problem.

Based on the bond dimension (rank) of the matrix product operator representation, the approximation rank may be selected as the next power of two, i.e. $2^N$ with N being an integer number, or any power of two greater than the bond dimension of the matrix product operator representation . As an example, if the rank of the matrix product operator representation of the intended matrix is 3, the approximation rank may be 4 or 8. However, a decent approximation may in principle also be made if the approximation rank is equal to or smaller than the rank of the matrix product operator representation of the intended matrix, although the orthogonal approximation is then more likely an inaccurate representation of the intended matrix.

To determine the orthogonal approximation, the method comprises the determination of an initial guess for an orthogonal approximation of the intended matrix, which may correspond to a Tensor train of isometric sub-tensors of the approximation rank. The initial guess may be composed of random sub-tensors fulfilling the isometry condition.

In preferred embodiments, the orthogonal approximation is a matrix product operator, and the orthogonal approximation is mathematically equivalent to a tensor network where each intermediate isometric sub-tensor has two external, uncontracted indices as well as two internal indices contracted with neighboring isometric sub-tensors in a chain-like fashion.

The uncontracted indices may correspond to the dimension of the input and output qubit state for each of the isometric subtensors, and the internal indices may be of the approximation rank.

In preferred embodiments, the approximation rank is a common bond dimension of all subtensors of the tensor network.

The initial guess is subsequently optimized based on an iterative optimization algorithm, such that a difference between the orthogonal approximation and the intended matrix is minimized. The difference may be based on a norm of the difference, e.g. the Frobenius norm or the cosine norm of the difference between the orthogonal approximation and the intended matrix, or subtensors thereof.

In preferred embodiments, the cost function is based on a difference function of the intended matrix and a renormalized orthogonal approximation evaluated based on tensor network calculus, wherein the renormalized orthogonal approximation is based on the orthogonal approximation multiplied by a renormalization constant, wherein the cost function is in particular based on the Frobenius norm of the difference function evaluated based on tensor network calculus, and/or wherein the renormalization constant is selected such that the intended matrix divided by the normalization constant does not increase the trace of the state it acts on and/or such that the trace of a density matrix, on which the renormalized orthogonal approximation acted on, is equal to or smaller than 1 regardless of the initial state.

The renormalization constant may conserve the constraint that quantum operations may not increase the trace of the density matrix of a quantum state, i.e. given any input density matrix $\rho$, the orthogonal approximation A should fulfill: $\mathrm{Tr}[A\rho A^\dagger] \leq 1$.

Given an arbitrary intended matrix M, the orthogonal approximation A may be renormalized by the renormalization constant c, such that the cost function of the difference is given as $C = \|cA - M\|^2$, wherein $\|\bullet\|$ denotes the chosen norm of the difference, e.g. the Frobenius norm. In other words, the operation to be implemented in a quantum computer may be an approximation of a renormalized intended matrix $c^{-1}M$.

In preferred embodiments, the renormalization constant c is obtained for each iterative step of optimizing the orthogonal approximation A for the intended matrix M according to $c = \mathrm{Re}\dfrac{\mathrm{Tr}\, A^\dagger M}{\|A\|^2}$ or according to a gradient based optimization algorithm in order to minimize the cost function.

For example, the renormalization constant may be updated using the steepest descent on c in order to minimize the cost function.

Based on the cost function quantifying a difference between the (renormalized) orthogonal approximation and the intended matrix, the elements of the orthogonal approximation may be updated to minimize the cost function.

In preferred embodiments, the optimization algorithm comprises a gradient descent and is in particular based on a Riemannian gradient descent or an optimization algorithm derived therefrom.

In other words, the method may comprise (stochastically) determining a gradient of the difference between the orthogonal approximation and the matrix product operator representation of the intended matrix, and subsequently updating the orthogonal approximation according to the determined gradient.

The skilled person will appreciate that it may be preferable in some embodiments to minimize a difference between the orthogonal approximation and the matrix product operator representation of the intended matrix, as it may reduce the computational complexity of the optimization. For example, a difference between the sub-tensors of the orthogonal approximation and the matrix product operator representation of the intended matrix may be determined, and the respective isometric sub-tensor may be updated based on the difference. Any update on the isometric sub-tensors should conserve the isometry constraint, i.e. the updated isometric sub-tensor should be isometric.

In preferred embodiments, the orthogonal approximation is a matrix product operator, which can be expressed as

$$A_m^l = A_{m_1\,m_2\,...\,m_n}^{l_1\,l_2\,...\,l_n} = V_{1\,m_1}^{l_1\,j_1} \cdot V_{2\,j_1\,m_2}^{l_2\,j_2} \cdot\ ...\ \cdot V_{n\,j_{n-1}\,m_n}^{l_n},$$

wherein $V_k$ are isometric, i.e. $V_k^{*\,j'_{k-1}\,m'_k}_{l_k j_k} V_k^{l_k j_k}_{j_{k-1} m_k} = \delta_{j_{k-1} j'_{k-1}} \delta_{m_k m'_k}$ for any index k of the isometric sub-tensors, and wherein each isometric sub-tensor $V_k$ is in particular iteratively optimized by alternating descent to optimize the orthogonal approximation.

The alternating descent may be implemented as a stochastic gradient descent of each of the sub-tensors, e.g. in a pre-determined or random order, such that each of the isometric subtensors of the orthogonal approximation approaches the sub-tensors of the matrix product operator representation of the intended matrix.

In preferred embodiments, a gradient of the cost function is determined based on a plurality of partial derivatives of the sub-tensors of the orthogonal approximation, e.g. by determining the partial derivative of the cost function with respect to the values of each sub-tensor, and by updating the orthogonal approximation based on the partial derivatives of a plurality of subtensors, e.g. all sub-tensors. The skilled person will appreciate that the optimization may comprise a stochastic optimization, e.g. that a partial derivative need not be determined for all parameters of the orthogonal approximation at each iteration, but a stochastically determined subset of the parameters may be updated, such as in stochastic gradient descent and related optimization algorithms.

The updated sub-tensors should however conserve the isometry constraint, e.g. by updating the isometric sub-tensors according to a Riemannian gradient descent. The Riemannian gradient descent may conserve the isometry constraint, e.g. by projecting an update vector and/or an updated sub-tensor onto the Stiefel manifold of isometric tensors.

For example, optimizing the orthogonal approximation under the isometry constraint can comprise determining a projection $\partial_k^R C \in \mathcal{T}_{V_k}$ of a partial derivative of the cost function or an optimization vector derived therefrom onto a space tangent of a Stiefel manifold $St(m, p, \mathbb{C}) :=$ of m $\times$ p isometric matrices at point $V_k$.

For example, a sub-tensor Vk may be updated according to $V_k \to V_k - \alpha \partial_k^R C$, where $\alpha$ is a step size, in an optimization algorithm similar to a steepest descent optimization. However, the partial derivative may also be initially used to determine a search direction, e.g. based an adaptive moment estimation, and the search direction may be projected onto the space tangent of the Stiefel manifold.

In preferred embodiments, optimizing the orthogonal approximation under the isometry constraint comprises determining a search direction pk for sub-tensor $V_k$ based on a partial derivative of the cost function and, optionally, information from a previous iterative step of the optimization algorithm; and determining a projection $p_{k,tangent} \in T_{Vk}$ of the search direction $p_k$ onto a space tangent to a Stiefel manifold $St(m,p,\mathbb{C}):=\{M \in \mathbb{C}^{m \times p} || M^\dagger M = I_p\}$, of m $\times$ p isometric matrices at point $V_k$, wherein the isomeric sub-tensor $V_k$ has dimensions of m $\times$ p when reshaped into a two-dimensional matrix.

The partial derivative and/or the search direction may subsequently be used to determine an update direction, and an isometric sub-tensor and/or the orthogonal approximation may be modified based on the update direction. For example, the modified sub-tensor and/or the modified orthogonal approximation may be retracted onto the Stiefel manifold for obtaining an updated sub-tensor and/or an updated orthogonal approximation.

In some embodiments, optimizing the orthogonal approximation under the isometry constraint comprises projecting a modified sub-tensor and/or modified orthogonal approximation, wherein the modified sub-tensor and/or the modified orthogonal approximation are modified based on the search direction and/or the update direction, onto the Stiefel manifold to the sub-tensor and/or the orthogonal approximation, respectively, and/or comprises updating a sub-tensor Vk by determining a retraction of an update to the sub-tensor Vk onto the manifold $V_k \to \mathcal{R}_{V_k}\left(\vec{V}_k^{update}\right)$, wherein the retraction is based on an update direction $\vec{V}_k^{update}$ which encodes a direction of an update to the sub-tensor $V_k$ based on the partial derivative of the cost function.

The retraction may project the update vector $\vec{V}_k^{update}$ onto the product of Stiefel manifolds with isometric sub-matrices, e.g. according to $V_k \to \mathcal{R}_{V_k}\left(-\alpha \partial_k^R C\right)$, thereby enforcing the isometry constraint at all iterative steps. For example, an updated intermediate sub-tensor may be determined based on the projection of an update gradient onto the space tangent of the Stiefel manifold, and the updated intermediate sub-tensor may be retracted onto the Stiefel manifold.

The skilled person will appreciate that this technique may be extended to optimization techniques, which may include momentum, e.g. based on the gradient determined in previous iterations, such that the update vector $\vec{V}_k^{update}$ may be a function of the projection of the partial derivative on the tangent of the Stiefel manifold as well as of a computation result from a previous iterative step. For example, the iterative optimization may be based on an adaptive moment based optimization algorithm. Thus, in more general terms, the update of the isometric sub-tensors may be based on an update function, which is based on the projection of a partial derivative of the cost function on the tangent of the Stiefel manifold, wherein the update function determines an intermediate update, and/or based on a retraction of the intermediate update onto the Stiefel manifold, such that the resulting sub-tensor/orthogonal approximation is isometric.

In preferred embodiments, optimizing the orthogonal approximation under the isometry constraint comprises updating the orthogonal approximation by updating all isometric subtensors, with each isometric sub-tensor $V_k$ being updated by performing a retraction on a Stiefel manifold $St(m,p,\mathbb{C}):=\{M \in \mathbb{C}m \times p || M^\dagger M = Ip\}$, of m $\times$ p isometric matrices at point $V_k$ in an updating direction, wherein the isomeric sub-tensor $V_K$ has dimensions of m $\times$ p when reshaped into a two-dimensional matrix, and wherein the updating direction is a direction of minimizing the cost function based on a partial derivative of the cost function, and in particular using the projection $p_{k,tangent}$ as an updating direction for updating the isomeric sub-tensor $V_k$.

The skilled person will appreciate that different retractions may be used in embodiments, such as the Cayley retraction or the singular value decomposition, just to give two examples, and the skilled person may select a suitable retraction from a plurality of known retractions.

The isometric sub-tensors can be reshaped into matrices, which are square for intermediate sub-tensors of the orthogonal approximation, and the reshaped matrices corresponding to the intermediate sub-tensors are unitary, based on the isometry constraint for the sub-tensors during the iterative optimization of the orthogonal approximation.

In preferred embodiments, isometric sub-tensors of the orthogonal approximation at ends of the orthogonal approximation are isometric and intermediate tensors are unitary, when reshaped into to a two-dimensional matrix, prior to extending the orthogonal approximation, such that all isometric sub-tensors are unitary after reshaping the isometric sub-tensors into square matrices.

To obtain a set of unitary matrices, which can be implemented in a quantum circuit, the subtensors at the end of the chain of tensors (sometimes also called border cores) can be extended using ancilla qubits, e.g. by preparing ancilla qubits in the zero state |o> to be multiplied with the first isometric sub-tensor, and by implementing a post selection at the opposite end of the chain of tensors.

Thus, the method may comprise extending the orthogonal approximation, such that all isometric sub-tensors are unitary after reshaping the isometric sub-tensors into square matrices. Extending the orthogonal approximation may be part of determining an initial guess for the orthogonal approximation or may be performed at the beginning of or after the orthogonal approximation has been iteratively optimized. For example, the initial guess may be composed of sub-tensors, which can be reshaped into unitary matrices, and the determination of the cost function may account for an implicit extension of the orthogonal approximation.

In some embodiments, extending the orthogonal approximation is based on providing one or more additional ancillary qubits as an input to a first end of the tensor network, wherein the method in particular provides at least log $R$ additional ancillary qubits, wherein $R$ is the approximation rank.

In some embodiments, extending the orthogonal approximation comprises a measurement of qubits at a second end of the tensor network, wherein a selection of the results with a predetermined measurement result for the qubits measured at the second end of the tensor network is part of implementing the intended matrix.

Based on the addition of ancilla qubits and the post-selection, all sub-tensors may be square after the appropriate reshape and may therefore form a set of unitary matrices, which may be implemented in a quantum circuit, by decomposing the isometric sub-tensors into quantum gates of the respective quantum architecture, e.g. a combination of single-qubit rotations and CNOT gates.

The skilled person will appreciate that the extension can be made prior to iteratively optimizing the orthogonal approximation or afterwards. In other words, it is possible to define the initial guess based on an extended matrix product operator, or to extend the orthogonal approximation after it has been iteratively optimized, e.g. by introducing and filling in additional elements of the border cores, such that the resulting border cores are unitary after the appropriate reshape.

In preferred embodiments, the method further comprises implementing the orthogonal approximation of the intended matrix as a quantum circuit on quantum hardware based on the encodings of the isometric sub-tensors into quantum gates.

The decompositions of the respective isometric sub-tensors may be combined to implement the orthogonal approximation based on a sequential application of the respective isometric sub-tensors, wherein an output state of log R qubits resulting from a unitary operation corresponding to one of the sub-tensors may be an input for the unitary operation corresponding to the next isometric sub-tensor in the tensor network.

In preferred embodiments, implementing the orthogonal approximation of the intended matrix as a quantum circuit is based on a sequential application of the isometric sub-operations to a set of qubits and rearranging the unitary matrices into a quantum network.

As a result, the depth of the quantum circuit may only scale polynomially with the number of qubits, as opposed to an exponential scaling of a general decomposition of a matrix into single-and two-qubit gates.

According to a second aspect, the invention relates to a processing system for encoding an intended matrix in a quantum circuit. The system is configured to determine an approximation rank for a matrix product operator representation of the intended matrix, and determine an initial guess for an orthogonal approximation of the intended matrix in the form of a tensor network with isometric sub-tensors of the approximation rank. The system is further configured to, starting with the initial guess, iteratively optimize the orthogonal approximation of the intended matrix based on an optimization algorithm minimizing a cost function subject to an isometry constraint for the isometric sub-tensors, wherein the cost function attributes a cost to the orthogonal approximation of the intended matrix based on a quality of the orthogonal approximation with respect to the intended matrix. The system is further configured to determine an implementation of the orthogonal approximation of the intended matrix in a quantum circuit based on encodings of the isometric sub-tensors into quantum gates.

The system may implement the method according to the first aspect or any combination of its embodiments. In particular, the system according to the second aspect may also benefit from any feature of the preferred embodiments of the first aspect.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The system may be configured to obtain the MPO representation of the intended matrix, e.g.by executing a decomposition algorithm for the intended matrix or by receiving the MPO representation from a suitable source, such as a database.

In some embodiments, the system is further configured to extend the orthogonal approximation, such that all isometric sub-tensors are unitary after reshaping the isometric sub-tensors into square matrices.

In preferred embodiments, the system is further configured to communicate the implementation to a quantum computing system for executing the orthogonal approximation on quantum hardware.

According to a third aspect, the invention relates to a hybrid quantum-classical computing system comprising a system according to the second aspect and quantum computing hardware. The hybrid quantum-classical computing system is configured to receive the implementation from the processing system, implement the implementation in the quantum computing hardware, and receive a calculation result from the quantum computing hardware.

According to a fourth aspect, the invention relates to a non-transitory medium comprising machine-readable instruction, which, when executed by a processing system, implement a method according to the first aspect and/or a system according to the second aspect and/or the third aspect.

DETAILED DESCRIPTION OF EMBODIMENTS

The features and numerous advantages of the methods and systems according to the present invention will best be understood from a detailed description of preferred embodiments with reference to the accompanying drawings, in which:

Fig. 1       schematically illustrates an example of a quantum computation system;

Fig. 2       illustrates an example of a computer-implemented method for encoding an intended matrix in a quantum circuit;

Fig. 3       schematically illustrates a flowchart for determining a matrix product operator representation based on a given intended matrix;

Fig. 4       schematically illustrates a strategy for determining a quantum circuit encoding for an approximation of an intended matrix according to an example;

Figs. 5 and 6       illustrate results obtained from applying the strategy discussed in conjunction with Fig. 4 to two different intended matrices; and

Figs. 7A, 7B       illustrate experimental runtime results from implementing a method for determining a quantum circuit when approximating a Diagonal matrix according to an example.

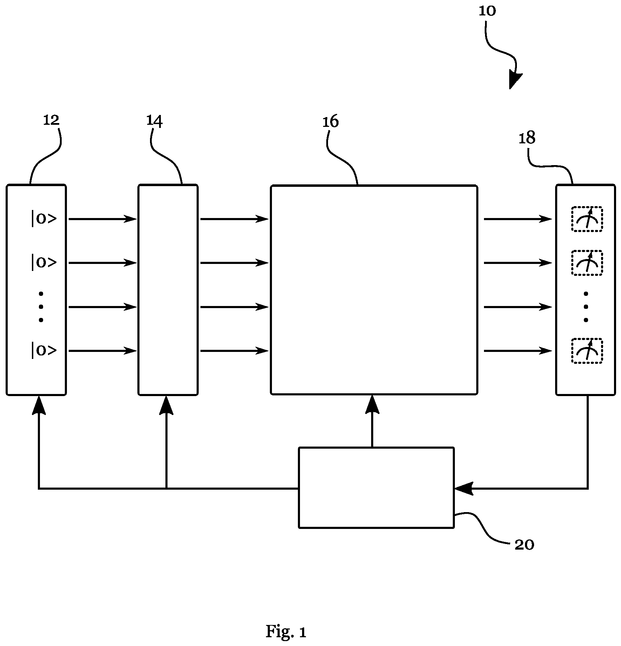

Fig. 1 schematically illustrates an example of a quantum computation system 10. The system 10 comprises a qubit register 12 comprising computation qubits, a state preparation module 14 for preparing quantum states of the computation qubits in a predetermined quantum state, a quantum matrix multiplication module 16 for transforming the predetermined quantum state according to a multi qubit operation, and a measurement module 18, for measuring an outcome of a quantum computation, e.g. by projective measurement of the state of some or all of the qubits. A processing system 20 can initialize the computation qubits in the qubit register 12, define operations of the state preparation module 14 and/or the quantum matrix multiplication module 16, and may retrieve a measured outcome from the measurement module 18, e.g. by determining and sending control operations to hardware of a quantum computation system 10.

The state preparation module 14 and the quantum matrix multiplication 16 may be similar in terms of construction and may implement a combination of single- and multi-qubit quantum gates for affecting the state of the qubits of the qubit register 12. It is noted that, in some embodiments, no state preparation module 14 may be necessary, and the combination of quantum gates determined by the quantum matrix multiplication module 16 may directly act on the quantum states of the qubits initialized in the qubit register 12 in some initialized quantum state. The types of quantum gates implemented in a quantum circuit by the state preparation module 14 and/or the quantum matrix multiplication module 16 may depend on the architecture of the specific quantum hardware employed, e.g. based on native gates of the quantum hardware. The state preparation module 14 and the quantum matrix multiplication module 16 may compute a quantum gate arrangement and/or send control operations to control quantum hardware, such that the quantum hardware realizes a desired computational operation on a certain quantum state.

However, the decomposition of an arbitrary computational operation into a quantum circuit is generally a hard computational problem, whose complexity usually scales exponentially with the number of qubits involved. Moreover, for a general operation, the depth of the circuit, i.e. the number of consecutive quantum gates for realizing a quantum operation may also scale exponentially with the number of qubits. Although efficient encodings of problems into a combination of quantum gates are known for specific types of problems, the encoding of many desirable problem types into a quantum circuit can still represent a significant obstacle for realizing quantum computation.

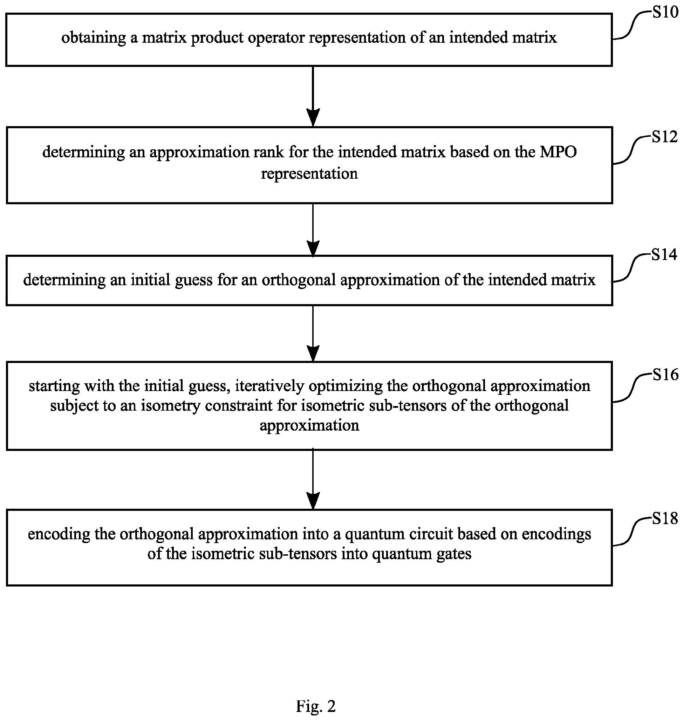

Fig. 2 illustrates an example of a computer-implemented method for encoding an intended matrix in a quantum circuit. The method comprises obtaining a matrix product operator representation of the intended matrix (S10), and determining an approximation rank for the intended matrix based on the MPO representation (S12). The method further comprises determining an initial guess for an orthogonal approximation of the intended matrix (S14) in the form of a tensor network with isometric sub-tensors of the approximation rank, and starting with the initial guess, iteratively optimizing the orthogonal approximation of the intended matrix (S16) based on an optimization algorithm minimizing a cost function subject to an isometry constraint for the isometric sub-tensors. The method further comprises encoding the orthogonal approximation into a quantum circuit based on encodings of the isometric sub-tensors into quantum gates (S18).

The cost function attributes a cost to the orthogonal approximation of the intended matrix based on a quality of the orthogonal approximation with respect to the intended matrix. Thus, instead of directly implementing the intended matrix in a quantum circuit, the method comprises approximating the intended matrix with an orthogonal approximation, which is constructed in the form of a tensor network with isometric sub-tensors (in the following also called isometric cores).

The constraint of isometry of the sub-tensors of the orthogonal approximation can be enforced at each step of the iterative optimization, e.g. based on a modified gradient descent method and/or a retraction of any updated sub-tensor onto a isometric sub-tensor, such that the optimization algorithm converges towards an approximation of the intended matrix with isometric sub-tensors. Generally, the approximation rank should be at least equal to the rank of the matrix product operator representation of the intended matrix, such that the constraint of isometric sub-tensors may be at least partially compensated by greater degrees of freedom in the contracted indices of the orthogonal approximation.

The isometric sub-tensors may be reshaped into square matrices for any sub-tensors between the ends of the tensor network (the so-called border cores), which may be unitary after the appropriate reshape. These sub-tensors, which can be reshaped into unitary matrices, can be implemented directly as quantum circuits with known decomposition algorithms, which may be computed efficiently due to the smaller size of the reshaped matrix/isometric sub-tensor. The skilled person will appreciate that the sub-tensors may be implemented without explicitly reshaping the isometric sub-tensors into a matrix.

For implementing the border cores, i.e. the isometric sub-tensors arranged at the ends of the tensors network in the form of a tensor train, the orthogonal approximation may be extended, such that all isometric sub-tensors can be reshaped into unitary matrices, e.g. by providing ancilla qubits at one end of the tensor network, and introducing measurement with post-selection at the opposite end, such that the border cores can equally be reshaped into square matrices. Such an extension can be pre-configured as part of the initial guess for the orthogonal approximation, or may be configured, when the orthogonal approximation has been iteratively optimized, e.g. by completing the border cores with additional indices, such that they are square matrices, when the appropriate reshape is applied, and filling in any missing matrix elements, such that the resulting matrix is unitary.

As a result, the orthogonal approximation can be implemented in a quantum circuit based on decompositions of the isometric sub-tensors, which are smaller in memory than the intended matrix. As a result, the circuit depth of the quantum circuit for the entire intended matrix may only scale polynomially with the number of qubits, allowing more complex computations on near-term quantum hardware.

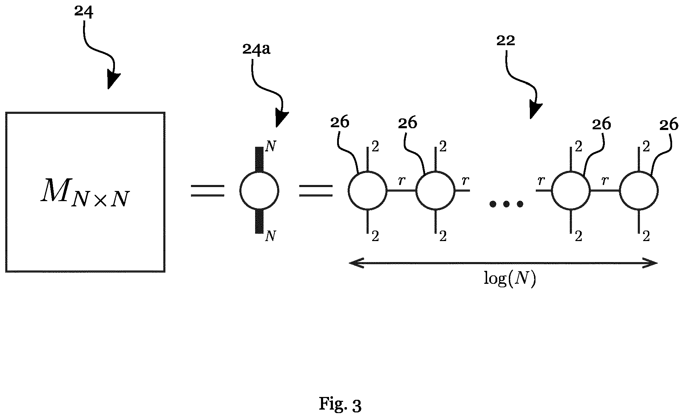

Fig. 3 schematically illustrates a flowchart for determining a matrix product operator representation 22 based on a given intended matrix 24 illustrated as a square matrix $M_{NxN}$ and in a Penrose graphical representation 24a according to an example. The intended matrix 24 may be an intended computational operation to be implemented on quantum hardware, e.g. a diagonal operator $M_D$ or a Laplace operator $M_L$ of a given order $N=2^n$, which may correspond to the computational basis states of a qubit register 12 with n qubits. As an example, the diagonal operator $M_D$ and the Laplace operator $M_L$ may be represented in matrix form as:

$$M_D = \begin{pmatrix} 0 & & & \\ & 1 & & \\ & & \ddots & \\ & & & 2^n - 1 \end{pmatrix} ; \qquad M_L = \begin{pmatrix} 2 & -1 & & \\ -1 & 2 & \ddots & \\ & \ddots & \ddots & -1 \\ & & -1 & 2 \end{pmatrix} \qquad (1)$$

These matrices can be involved in algorithms relevant for quantum computing, such as solving Partial Differential Equations and optimization algorithms, but are not unitary.

The intended matrix 24 may be represented in a Penrose diagram representation 24a by a circle with two uncontracted indices of dimension N. This intended matrix 24 can be approximated or represented by a matrix product operator representation 22 composed of a plurality of sub-tensors 26, wherein summation according to the contracted indices recovers the respective elements of the intended matrix 24, e.g. according to:

$$A_m^l = A_{m_1 m_2 \dots m_n}^{l_1 l_2 \dots l_n} = V_{1 \, m_1}^{l_1 j_1} \cdot V_{2 \, j_1 m_2}^{l_2 j_2} \cdot \dots \cdot V_{n \, j_{n-1} m_n}^{l_n}, \qquad (2)$$

wherein an MPO representation 22 for an intended matrix 24, $A_m^l$ may be composed of a plurality of log (N) sub-tensors 26, $V_k$, with uncontracted indices $l_k$, $m_k$, and contracted indices $j_k$, $j_{k-1}$. Each sub-tensor 26 indicated by circles in Fig. 3 has four indices, except for the boundary cores at opposite ends of the MPO representation 22 (which have three), wherein contracted indices (protruding horizontally) are MPO bond indices of the bond dimension r. The uncontracted indices have the dimension of the quantum state of one qubit, i.e. 2, in the example.

Such an MPO representation 22 may be found for an intended matrix 24 or an approximation thereof with several known algorithms. In principle any intended matrix 24 may be represented in a matrix product operator (MPO) representation 22, by decomposing the intended matrix 24 into a set of matrix products with the property that their matrix product equals a specific element of the intended matrix 24.

For a large class of operators, such as the diagonal operator $M_D$ or a Laplace operator $M_L$, including all Hamiltonians with short-range interactions in one dimension, the required MPO bond dimension r, is both small (e.g. $\approx 5$) and constant in the size of the system, such that the intended matrix 24 may be stored with a plurality of comparatively small sub-tensors 26. However, while it is possible to efficiently encode an MPS state in a quantum circuit, e.g. as shown by *Lubasch et al.*, no corresponding strategy exist for general MPOs.

Nonetheless, the method illustrated in the example of Fig. 2 may be used to provide a quantum circuit for an approximation of the intended matrix 24.

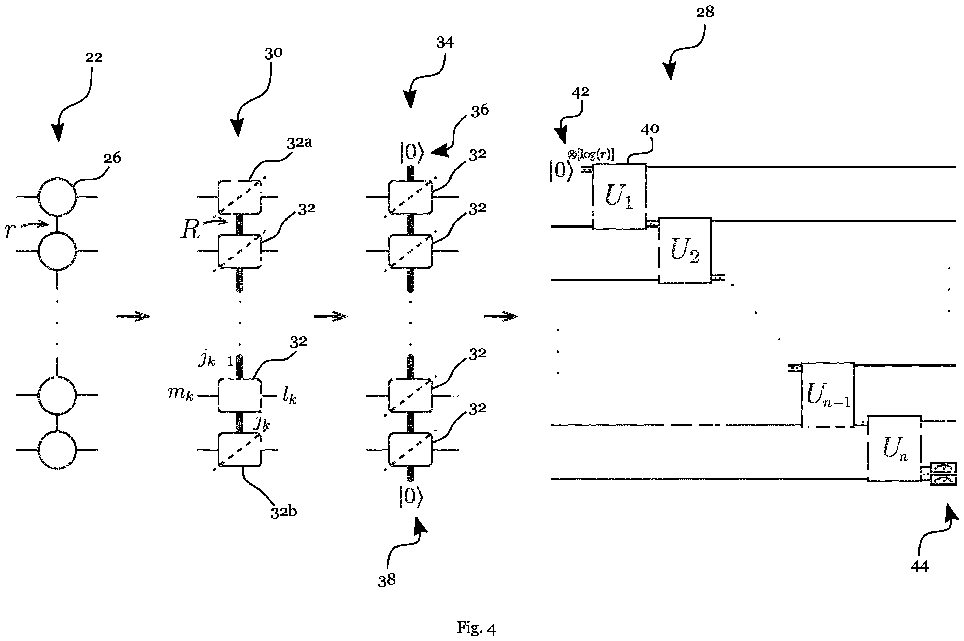

Fig. 4 schematically illustrates a strategy for determining a quantum circuit 28 encoding for an approximation of an intended matrix 24 according to an example. The intended matrix 24 is initially represented by an MPO representation 22 with log(N) sub-tensors 26 having a rank r, based on a suitable decomposition and/or approximation algorithm.

Based on the rank *r* of the MPO representation 22, and approximation rank *R* is selected, which should be equal to or greater than the rank r of the MPO representation 22 and may be a power of two, i.e. $2^k$ with k being an integer number. Based on the selected approximation rank R, the method may generate an initial guess for an orthogonal approximation 30 with isometric subtensors 32, 32a, 32b, such that all isometric sub-tensors 32, 32a, 32b are isometric, when reshaped into two-dimensional matrices, wherein a bond dimension of the orthogonal approximation 30 is equal to the approximation rank R. The isometric sub-tensors 32, 32a, 32b for the initial guess of the orthogonal approximation 30 may be randomly generated, e.g. selected from random isometric sub-tensors 32, 32a, 32b.

Starting with the initial guess for the orthogonal approximation 30, the method may proceed by iteratively optimizing the orthogonal approximation 30 based on an optimization algorithm with the goal of minimizing a distance metric to the intended matrix 24, wherein the intermediate steps of the optimization algorithm can maintain isometry of the sub-tensors 32, 32a, 32b.

Since the intended matrix 24 may not be a unitary matrix, which can be directly implemented on a quantum computer, but a quantum operation A would have to conserve the trace

$$\text{Tr}\left[A\rho A^\dagger\right] \le 1, \qquad (3)$$

it would be preferred to minimize a difference metric with respect to a renormalized orthogonal approximation 30, e.g. according to

$$C = \|cA - M\|^2,$$ 

(4)

such that the inequality of Eq (3) is fulfilled. As a result, a renormalized intended matrix 24, e.g. $c^{-1} M$, may be realized in a quantum circuit instead of the intended matrix 24, i.e. M. From a practical point of view, it may be necessary for some computations to remember this normalization factor c and take it into account at the end of calculations, e.g. for interpreting the result when the result is dependent on the complex output quantum state.

For the optimization algorithm, a processing system, such as a computer, may be tasked to find the minimum of the cost function under the isometry constraint for all sub-tensors 32, 32a, 32b, written in short form as $V_k$, i.e.

$$\text{minimize}_{c,A} \ C = \|cA - M\|^2$$

(5)

$$\text{subject to } V_k \colon V_k^\dagger V_k = I \text{ for all } k = 1, \dots, n,$$

where $\|*\|$ denotes a suitable norm, such as the Frobenius norm, and wherein the optimum is taken by both c and A. This optimization may be implemented as an alternating descent, by determining a partial derivative of the cost function with respect to any isometric sub-tensor 32, 32a, 32b under the isometry constraint, and by optimizing the orthogonal approximation 30 based on the partial derivatives, such as by a gradient descent based algorithm, e.g. stochastic gradient descent or a momentum based algorithm, such as adaptive moment estimation.

The isometry constraint may be observed by ensuring the isometry of the sub-tensors 32, 32a, 32b at each update step of the optimizing algorithm and/or by considering the isometry constraint as part of the gradient direction.

Generally, any m times p isometric matrix belongs to the Stiefel manifold

$$\text{St}(m, p, \mathbb{C}) \coloneqq \{ M \in \mathbb{C}^{m \times p} \mid M^\dagger M = I_p \}$$

(6)

which is a Riemannian manifold. The cost function C to be minimized can thus be defined on the Cartesian product of n Stiefel manifolds. To find a set of isometric matrices $V_k$ minimizing this cost function, one can use gradient-based optimization methods, such as Riemannian gradient descent which works with optimization problems under constraints as in the present case.

In regular gradient-based methods, such as gradient descent, the variables being optimized are updated by moving in the opposite direction of the cost function gradient:

$$V_k \to V_k - \alpha \, \partial_k C$$

(7)

where a is a step size. In the Riemannian generalization of these methods, to determine the direction of this movement, instead of $\delta_k C$, its projection $\delta_k^R C$ onto the space tangent to the Stiefel manifold at point $V_k$ can be used. Further, to update the values of matrices $V_k$ based on the partial derivative and/or its projection, a retraction onto the manifold can be used:

$$V_k \to \mathcal{R}_{V_k}\left(-\alpha \, \partial_k^R C\right)$$

(8)

In optimization methods that use information from previous optimization steps, such as gradient descent with momentum, the concept of vector transport is also used, which is a generalization of the concept of parallel transport, and may therefore implemented directly based on the afore-mentioned scheme.

The Riemannian formulation of gradient descent can be implemented as an iterative procedure that at every step computes the Riemannian gradient of the optimization function C at the current point on the manifold, and may then use the chosen retraction in the direction of the negative gradient to find the next point.

The algorithm may then be implemented as follows:

Step 0: Obtain an initial guess for the orthogonal approximation 30;

Step 1: Find a renormalization constant c that minimizes the cost function, e.g. of Eq. (4), with a fixed orthogonal approximation 30 (i.e. with A being constant during this step);

Step 2: Find a new approximation A via one step of the Riemannian gradient descent for the problem of Eq. (5), wherein the renormalization constant c may be constant during this step, and then go back to step 1.

The iterative algorithm may be terminated at any point, e.g. after predetermined number of iterations, or when a predetermined cost threshold has been achieved by the cost function.

Once an optimized orthogonal approximation 30 is obtained, which may be a renormalized orthogonal approximation 30 of the intended matrix 24, $c^{-1}M$, all the inner sub-tensors 32 of the orthogonal approximation 30 should already be unitary matrices after a corresponding reshape to a two-dimensional matrix.

However, the sub-tensors 32a, 32b at the boundaries (i.e. $V_1$ and $V_n$, also called border cores) may only be isometries. However, the border cores 32a, 32b may be extended to unitary matrices by extending the sub-tensors under the isometry condition with the addition |o> states 36 at one end of the tensor network, and a projection onto |o> states 38 at the opposite end of the tensor network to maintain the correspondence with the intended matrix 24. By extending the orthogonal approximation 30, an extended orthogonal approximation 34 can be obtained, which features only sub-tensors 32 which can be reshaped into unitary matrices.

As all the sub-tensors 32 can be reshaped into unitary matrices, the transition to the quantum circuit can be implemented by concatenating the isometric sub-tensors 32 in a cascade of quantum operations 40, implemented as unitary operations $U_1$-$U_n$, as shown in the quantum circuit 28 in the example of Fig. 4. Here, the uncontracted indices of the isometric sub-tensors 32 may correspond to input and output states of the respective quantum operation 40, while the contracted indices of the isometric sub-tensors 32 correspond to quantum states, which are input for the next unitary operation 40 in the concatenated chain of unitary operations 40. Thus, each unitary operation 40 has a number of $1+\log(R)$ qubit inputs and qubit outputs, and $\log(R)$ qubits are processed by the subsequent unitary operation 40 in the concatenated chain of unitary operations 40. The decomposition of these sub-tensors 32 into quantum gates may be performed based on known decomposition techniques for the respective quantum hardware architecture.

The upper |o> state 36 as the input to the upper border core 32a of the extended orthogonal approximation 34 may correspond to preparing additional ancilla qubits 42 in the "zero" states. At the same time, the lower |o> state 38 as the input to the upper border core 32a of the extended orthogonal approximation 34 may correspond to a projection onto the zero states, i.e. measurements with post-selection.

The skilled person will appreciate that the actual quantum state, which is prepared or measured for these operations, can be changed, as long as the correspondence with the intended matrix 24 is preserved, e.g. by preparing and post-selecting based on |1> states, or different states, based on an appropriate basis change. However, for the sake of brevity, a preparation of "|o>" states and a corresponding post-selection will be considered in the following.

Thus, as shown in the example of Fig. 4, the quantum circuit 28 may be implemented by the following steps of a quantum processing system:

Step 1: Prepare ancillary qubits 42 in the zero state $|0\rangle^{\otimes \log_2(R)}$. The remaining qubits remain "with their legs open" (solid horizontal lines on the left side of the quantum circuit 28), i.e. the qubits will be encoded according to some initial state based on the input for the computation.

Step 2: Sequentially apply gates $U_1$, ..., $U_n$ which should be decomposed into quantum gate implementations based on the employed quantum hardware, such as a combination of one-qubit and two-qubit operations.

Step 3: Measure ancillary qubits 44 in the computational basis, and if all measurement outcomes in Step 3 are equal to "o", record the result, else go back to step 1.

It is noted that for the post-selection one should measure not the qubits that were originally introduced as ancillary qubits 42 to the initial border core 32a, but qubits from the other end of the orthogonal approximation 30, i.e. corresponding to the opposite border core 32b (see Fig. 4).

The algorithm implements a quantum circuit 28 corresponding to the intended matrix 24 only if all ancilla qubit measurements 44 are equal to |o>, e.g. a bitstring of zeros is obtained for the corresponding qubits. The quantum system's state just before the measurement determines the likelihood of this "successful" result. This implies that the initial state of the system to which the quantum scheme is applied affects this probability.

$$\mathrm{Pr}_{suc} = \mathrm{Tr}\left[\langle 0|_{a_2} \boldsymbol{U}\rho_{\mathrm{in}} \otimes |0\rangle\langle 0|_{a_1} \boldsymbol{U}^{\dagger} |0\rangle_{a_2}\right]. \tag{9}$$

The system's initial state $\rho_{\mathrm{in}}$ may be determined by the specific computational task. One can average the probability value over all probable initial states of the system $<\mathrm{Pr}_{suc}>$ to ignore this dependence. To do this, $\rho_{\mathrm{in}}$ can be considered as a maximally mixed state, which is a uniform mixture of states from an orthonormal basis. In this case, $\rho_{\mathrm{in}} = 1/2^n\, I$, utilizing $<o|_{a2}U|o>_{a1} = A$, and the average probability may be obtained as

$$\langle Pr_{suc} \rangle = \frac{||A||^2}{2^n} \simeq \frac{||M||^2}{c^2 2^n}. \tag{10}$$

That is, the success probability may be mainly determined by the norm of the orthogonal approximation 30. Meanwhile, since $A$ is approximately equal to $c^{-1} M$, it can be seen how the success probability is related to the normalization coefficient c, i.e. the higher the normalization coefficient, the lower the success probability. In other words, there may be a trade-off between the accuracy of the approximation and the success probability. The best theoretical value of the normalization constant c was found to be c = $\lambda_{max}(M)$, i.e. equal to the largest eigenvalue of the intended matrix 24. The intended matrix 24 may be approximated with sufficient accuracy provided that the approximation rank R of the orthogonal approximation 30 is sufficiently large.

It is noted that the depth of the quantum circuit 28 may scale polynomially with the approximation rank $R$ and the size of the approximation rank $R$ may further increase the complexity of decomposing the isometric sub-tensors 32 into combinations of quantum gates, as each of the unitary operations $U_k$ acts on $\log_2 R+1$ qubits, where R is the tensor train (TT)-rank of the orthogonal approximation $A$.

It is also noted that numerical strategies to approximately decompose general multi-qubit unitary operations 40 with combinations of single qubit and CNOT gates can achieve a CNOT gate count close to the theoretical lower limit presented in Shende et al. (Minimal universal two-qubit controlled-not-based circuits. Phys. Rev. A, 2004), i.e. an arbitrary decomposed m-qubit gate requires $4^m - 1$ CNOT gates, thus in the present case it would require $n*4^{\log R+1}$, i.e. approximately $n*R^2$ CNOT gates, in total. Therefore, generally the lower the approximation rank R selected for the orthogonal approximation 30, the simpler the quantum circuit 28 turns out, but the worse the accuracy of the orthogonal approximation 30.

In order to demonstrate the capabilities of the method, frequently-used matrices are considered and encoded into many-qubit quantum circuits 28. Specifically, a matrix with a discretized linear function on the diagonal $M_D$ and the Laplace operator $M_L$, corresponding to of the second derivative matrix after discretization, are considered, both of which are not unitary.

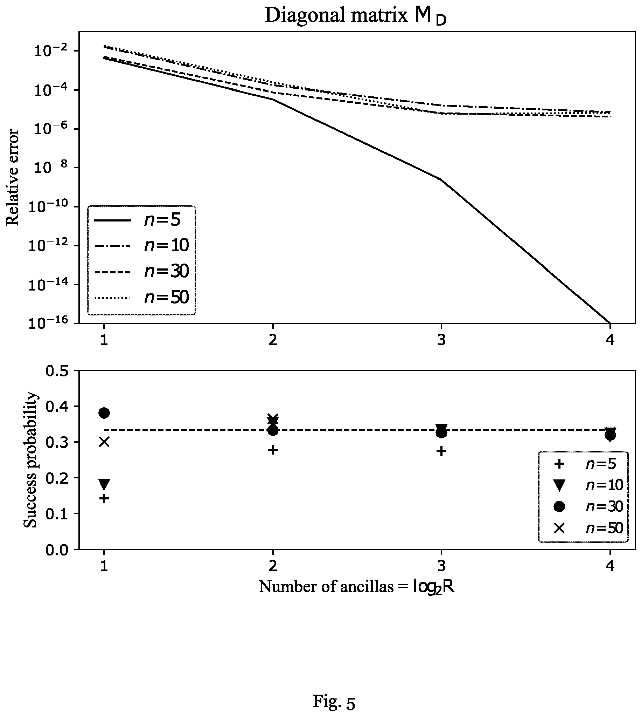

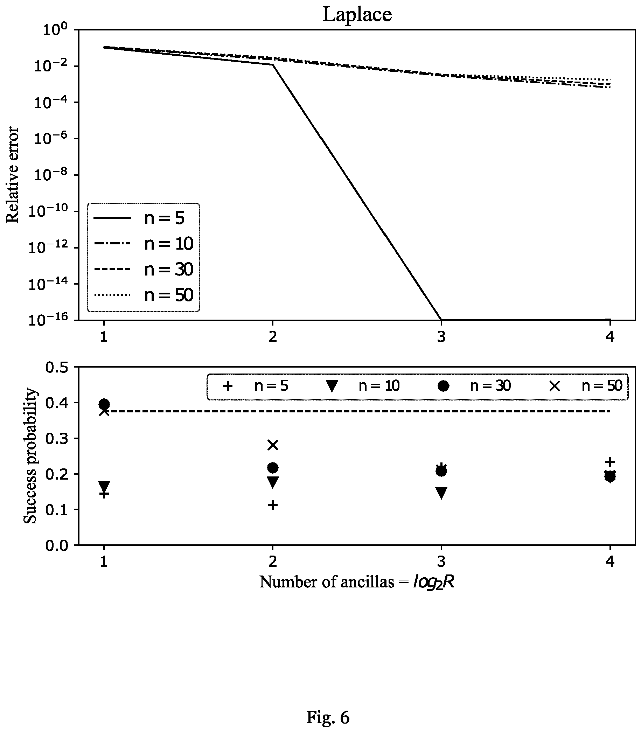

Figs. 5 and 6 illustrate results obtained from applying the algorithm discussed in conjunction with Figs. 2 and 4 to the diagonal matrix $M_D$ and the Laplace matric $M_L$ of Eq. (1), respectively. The Laplace operator $M_L$ can be used for the solution of Partial Differential Equations (PDE), while diagonal operator $M_D$ can be used in optimization and PDE solutions. For any $n>1$, the MPO forms of $M_D$ and $M_L$ matrices have TT-ranks $r$ equal to 2 and 3, respectively.

The upper graph illustrates the minimum achieved error in the approximation of the diagonal (Fig: 5) and Laplace (Fig. 6) matrices by the orthogonal approximation 30 as a function of the approximation rank $R$ (in terms of the number of used ancilla qubits 42 equal to $\log_2 R$) for 4 different sizes of the intended matrix 24 (n is the number of qubits). The lower graph illustrates the corresponding average success probabilities based on the ancilla qubit measurements 44. The dotted lines represent values of $||M||^2 \lambda_{max}^{-2}(M) 2^{-n}$ (see Eq. (10)), which for both matrices are independent of n for large numbers n of qubits.

For both matrices, the method is able to achieve reasonable accuracy (errors about 0.01% and 0.5% for $M_D$ and $M_L$, respectively) and a sufficient success probability (more than 5%) up to 50 qubits, which is not a limitation for the method. An important property found in the experiments is that the error and the success probability almost do not depend on the number of qubits, such that the method is likely to scale well for more complex tasks.

For assessing the efficiency of the computation, the algorithm can be considered to consist of essentially three steps, i.e. finding an orthogonal approximation 30, extending the boundary cores 32a, 32b to allow a reshape into unitary matrices, and decomposing the resulting $2R*2R$ unitary matrices into a sequence of one- and two-qubit gates.

The time required for the last step is determined by the decomposition method used, and will not be discussed here. Moreover, in the example, the extension step is skipped and, based on an initial guess for an orthogonal approximation 30, instead of optimizing the kernels $V_1$ and $V_n$ themselves, the extended sub-tensors 32 corresponding to $U_1$ and $U_n$ are directly optimized in the iterative optimization algorithm.

Thus, the complexity of the algorithm for determining the quantum circuit 28 may be mainly determined by the complexity of the iterative optimization process. The execution time of the optimization procedure is generally proportional to the number of iterations and the execution time of each iteration. The number of iterations required for the optimization algorithm to converge may depend on several factors, including the required accuracy, the number of optimization parameters, the chosen learning rate, and the optimization starting point. Therefore, it may be difficult to determine a sufficient number of iterations in advance, and in the following the focus will be on the complexity of one iteration of the optimization procedure consisting of the following elements:

Element 1: The calculation of the normalized constant c may have a computational complexity scaling of $O(nR^3)$, based on the computational complexity of multiplying while simultaneously taking the trace of two MPOs with ranks $r_1$ and $r_2$ having a computational complexity of $O(n\, r_1 r_2 \max(r_1, r_2))\$$.

Element 2: The computation of the cost function may have a computational complexity of $O(n(r+R)^3)$. After summation of two MPOs, their ranks are added, and the resulting $r_1+r_2$ rank MPO is then contracted with its complex conjugate, which has a computational complexity of $O(n(r_1+r_2)^3)$.

Element 3: The evaluation of the derivatives of the cost function using automatic differentiation. When using automatic differentiation, its algorithmic complexity is theoretically guaranteed to be no greater than the algorithmic complexity of the original program, which is equivalent to the preceding element (2) and equals $O(n R^3)$.

Element 4: The optimization process includes a Riemannian optimization step, which may involve the calculation of Riemannian gradients, retractions, and vector transports for each $V_k$. For $2R^*2R$ matrices, the first and third steps of the Riemannian optimization step have a computational complexity scaling as $O(R^3)$. The complexity of the second step depends on the chosen retraction method. In an example implementation, the SVD retraction may be employed, which also has a complexity of O(R3) for $2R^*2R$ matrices. Therefore, the Riemannian optimization step of each iteration may have a scaling of $O(n R^3)$.

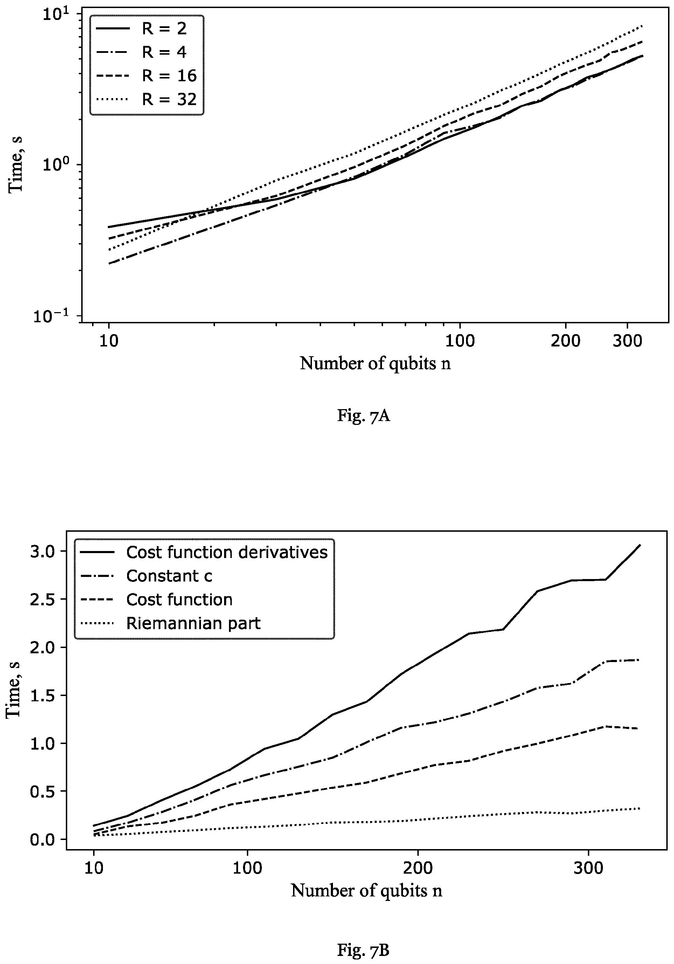

Fig. 7A, 7B illustrate experimental runtime results from implementing the method discussed in conjunction with Figs. 2 and 4 for determining a quantum circuit 28 when approximating the Diagonal matrix $M_D$ of Eq. (1) according to an example.

Fig. 7A illustrates the execution time of one iteration of the iterative optimization algorithm for different approximation ranks R of the orthogonal approximation 30 as a function of the number of qubits n, which depends on the size of the intended matrix 24.

Fig. 7B illustrates the experimentally determined execution times of each iteration and its elements (1)-(4) (as discussed in the section above) as a function of the qubit count n.

Fully complying with the theoretical estimate of the algorithm's complexity, these run-times depend polynomially on the number of qubits n and hence polylogarithmically on the target matrix size $N=2^n$ of the intended matrix 24.

Thus, the method for determining a quantum circuit 28 promises to provide an efficient algorithm for determining quantum gate decompositions for matrices in quantum computing applications. It is noted that the depth of the quantum circuit 28 only scales linearly with the qubit number n and therefore logarithmically with matrix size of the intended matrix 24.

The algorithm may leverage the relative strengths of quantum and classical hardware for generating an optimal algorithm for a given computation. Specifically, the orthogonal approximation 30 may be efficiently optimized on classical hardware with respect to a tensor network representation/approximation 22 of the intended matrix 24, even if the intended matrix 24 is large. At the same time, the resulting orthogonal approximation composed of compact sub-operations may be efficiently implemented on quantum hardware with a circuit depth, which may only scale linearly with qubit number.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | system |
| 12 | qubit register |
| 14 | state preparation module |
| 16 | quantum matrix multiplication module |
| 18 | measurement module |
| 20 | processing system |
| 22 | MPO approximation |
| 24 | intended matrix |
| 24 | Penrose diagram representation of the intended matrix |
| 26 | sub-tensor |
| 28 | quantum circuit |
| 30 | orthogonal approximation |
| 32, 32a, 32b | isometric sub-tensors |
| 34 | extended orthogonal approximation |
| 36, 38 | \|o> states for border cores |
| 40 | quantum operations |

| 42 | ancilla qubits |
| 44 | ancilla qubit measurements |

**Claims**

1. A computer-implemented method for encoding an intended matrix (24) in a quantum circuit (28), said method comprising the steps of:

   obtaining a matrix product operator, MPO, representation (22) of the intended matrix (24);
   determining an approximation rank (R) for the intended matrix (24) based on the MPO representation (22);
   determining an initial guess for an orthogonal approximation (30, 34) of the intended matrix (24) in the form of a tensor network with isometric sub-tensors (32, 32a, 32b) of the approximation rank (R);
   starting with the initial guess, iteratively optimizing the orthogonal approximation (30, 34) of the intended matrix (24) based on an optimization algorithm minimizing a cost function subject to an isometry constraint for the isometric sub-tensors (32, 32a, 32b), wherein the cost function attributes a cost to the orthogonal approximation (30, 34) of the intended matrix (24) based on a quality of the orthogonal approximation (30, 34) with respect to the intended matrix (24), and
   encoding the orthogonal approximation (30, 34) into a quantum circuit (28) based on encodings of the isometric sub-tensors (32, 32a, 32b) into quantum gates.

2. The method of claim 1, wherein the approximation rank (R) is greater than a rank (r) of the matrix product operator representation (22) of the intended matrix (24), wherein the rank (r) of the matrix product operator representation (22) is in particular a bond dimension of the matrix product operator representation (22); and/or
   wherein the approximation rank (R) is a common bond dimension of all isometric sub-tensors (32, 32a, 32b) of the orthogonal approximation (30, 34).

3. The method of any one of the preceding claims, wherein the orthogonal approximation (30, 34) is a matrix product operator, and wherein the orthogonal approximation (30, 34) is mathematically equivalent to a tensor network where each intermediate isometric sub-tensor (32) has two external, uncontracted indices as well as two internal indices contracted with neighboring isometric sub-tensors (32, 32a, 32b) in a chain-like fashion.

4. The method of any one of the preceding claims, wherein the cost function is based on a difference function of the intended matrix (24) and a renormalized orthogonal approximation (30, 34) evaluated based on tensor network calculus, wherein the renormalized orthogonal approximation (30, 34) is based on the orthogonal approximation (30, 34) multiplied by a renormalization constant, wherein the cost function is in particular based on the Frobenius norm of the difference function evaluated based on tensor network calculus, and/or wherein the renormalization constant is selected such that the intended matrix (24) divided by the normalization constant does not increase the trace of the state (36, 38) it acts on and/or such that the trace of a density matrix, on which the renormalized orthogonal approximation (30, 34) acted on, is equal to or smaller than 1 regardless of the initial state
   wherein the renormalization constant c is in particular obtained for each iterative step of optimizing the orthogonal approximation (30, 34) A for the intended matrix M (24) according to $c = \mathrm{Re}\,\frac{\mathrm{Tr}\,A^\dagger M}{\|A\|^2}$ or according to a gradient based optimization algorithm in order to minimize the cost function.

5. The method of any one of the preceding claims, wherein the optimization algorithm comprises a gradient descent and is in particular based on a Riemannian gradient descent or an optimization algorithm derived therefrom.

6. The method of any one of the preceding claims, wherein the orthogonal approximation (30, 34) is a matrix product operator, which can be expressed as

$$A_m^l = A_{m_1\,m_2\,...\,m_n}^{l_1\,l_2\,...\,l_n} = V_1{}_{m_1}^{l_1\,j_1} \cdot V_2{}_{j_1\,m_2}^{l_2\,j_2} \cdot\ ...\ \cdot V_n{}_{j_{n-1}\,m_n}^{l_n},$$

wherein $V_k$ are isometric, i.e. $V_k^*{}_{l_k j_k}^{j'_{k-1} m'_k} V_k{}_{j_{k-1} m_k}^{l_k j_k} = \delta_{j_{k-1} j'_{k-1}} \delta_{m_k m'_k}$ for any index $k$ of the isometric sub-tensors (32, 32a, 32b), and wherein each isometric sub-tensor $V_k$ is in particular iteratively optimized by alternating descent to optimize the orthogonal approximation (30, 34).

7. The method of any one of the preceding claims, wherein optimizing the orthogonal approximation (30, 34) under the isometry constraint comprises:

determining a search direction $p_k$ for sub-tensor $V_k$ based on a partial derivative of the cost function and, optionally, information from a previous iterative step of the optimization algorithm; and

determining a projection $p_{k,tangent} \in \mathcal{T}_{V_k}$ of the search direction $p_k$ onto a space tangent to a Stiefel manifold $St(m,p,\mathbb{C}):=\{M\in\mathbb{C}^{m\times p}||M^\dagger M=I_p\}$, of m $\times$ p isometric matrices at point $V_k$, wherein the isomeric sub-tensor $V_k$ has dimensions of m $\times$ p when reshaped into a two-dimensional matrix.

8. The method of any one of the preceding claims, wherein optimizing the orthogonal approximation (30, 34) under the isometry constraint further comprises:
updating the orthogonal approximation (30, 34) by updating all isometric sub-tensors (32, 32a, 32b), with each isometric sub-tensor Vk being updated by performing a retraction on a Stiefel manifold $St(m,p,\mathbb{C}):=\{M\in\mathbb{C}m\times p||M^\dagger M=Ip\}$, of m $\times$ p isometric matrices at point $V_k$ in an updating direction, wherein the isomeric sub-tensor $V_K$ has dimensions of m $\times$ p when reshaped into a two-dimensional matrix, and wherein the updating direction is a direction of minimizing the cost function based on a partial derivative of the cost function, and in particular using the projection $p_{k,tangent}$ as an updating direction for updating the isomeric sub-tensor Vk.

9. The method of any one of the preceding claims, wherein isometric sub-tensors (32a, 32b) of the orthogonal approximation (30, 34) at ends of the orthogonal approximation (30, 34) are isometric and intermediate tensors (32) are unitary, when reshaped into to a two-dimensional matrix, prior to extending the orthogonal approximation (30, 34), such that all isometric sub-tensors (32, 32a, 32b) are unitary after reshaping the isometric sub-tensors (32, 32a, 32b) into square matrices.

10. The method of any one of the preceding claims, wherein the method comprises providing one or more additional ancillary qubits (42) as an input to a first end of the tensor network, wherein the method in particular provides at least log R additional ancillary qubits (42), wherein R is the approximation rank (R),
wherein the method in particular comprises measuring qubits (44) at a second end of the tensor network, wherein a selection of the results with a predetermined measurement result for the qubits (44) measured at the second end of the tensor network is part of implementing the intended matrix (24).

11. The method of any one of the preceding claims, wherein the method further comprises implementing the orthogonal approximation (30, 34) of the intended matrix (24) as a quantum circuit (28) on quantum hardware based on the encodings of the isometric subtensors (32, 32a, 32b) into quantum gates
wherein implementing the orthogonal approximation (30, 34) of the intended matrix (24) as a quantum circuit (28) is in particular based on a sequential application of the isometric sub-operations to a set of qubits and rearranging the unitary matrices into a quantum network.

12. A processing system (20) for encoding an intended matrix (24) in a quantum circuit (28), wherein said system (10) is configured to:

determine an approximation rank (R) for a matrix product operator, MPO, representation (22) of the intended matrix (24);
determine an initial guess for an orthogonal approximation (30, 34) of the intended matrix (24) in the form of a tensor network with isometric sub-tensors (32, 32a, 32b) of the approximation rank (R);
starting with the initial guess, iteratively optimize the orthogonal approximation (30, 34) of the intended matrix (24) based on an optimization algorithm minimizing a cost function subject to an isometry constraint for the isometric sub-tensors (32, 32a, 32b), wherein the cost function attributes a cost to the orthogonal approximation (30, 34) of the intended matrix (24) based on a quality of the orthogonal approximation (30, 34) with respect to the intended matrix (24), and
determine an implementation of the orthogonal approximation (30, 34) of the intended matrix (24) in a quantum circuit (28) based on encodings of the isometric subtensors (32, 32a, 32b) into quantum gates.

**13.** The system (10) of claim 12, wherein the system (10) is further configured to communicate the implementation to a quantum computing system for executing the orthogonal approximation (30, 34) on quantum hardware.

**14.** Hybrid quantum-classical computing system comprising a system (10) of claim 12 or 13 and quantum computing hardware, wherein the hybrid quantum-classical computing system is configured to

receive the implementation from the processing system (20),
implement the implementation in the quantum computing hardware, and
receive a calculation result from the quantum computing hardware.

**15.** A computer program comprising machine readable instructions, which when the computer program is executed by a processing unit cause the processing unit to implement a method according to any one of claims 1-11 and/or to implement and/or to control a system according to any one of claims 12-14.

Fig. 1

obtaining a matrix product operator representation of an intended matrix — S10

determining an approximation rank for the intended matrix based on the MPO representation — S12

determining an initial guess for an orthogonal approximation of the intended matrix — S14

starting with the initial guess, iteratively optimizing the orthogonal approximation subject to an isometry constraint for isometric sub-tensors of the orthogonal approximation — S16

encoding the orthogonal approximation into a quantum circuit based on encodings of the isometric sub-tensors into quantum gates — S18

Fig. 2

Fig. 3

Fig. 4

Fig. 5

Fig. 6

Fig. 7A

Fig. 7B

## EUROPEAN SEARCH REPORT

Application Number

EP 23 18 8760

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MELNIKOV AR A ET AL: "Quantum state preparation using tensor networks", QUANTUM SCIENCE AND TECHNOLOGY, [Online] vol. 8, no. 3, 19 June 2023 (2023-06-19), page 035027, XP093120444, ISSN: 2058-9565, DOI: 10.1088/2058-9565/acd9e7 Retrieved from the Internet: URL:https://iopscience.iop.org/article/10.1088/2058-9565/acd9e7/pdf> [retrieved on 2024-01-17] * abstract; Sections 1-4 and Appendices B and C; figures 1,2,6 * | 1-15 | INV. G06N10/60 G06N10/20 |
| A | US 2022/108218 A1 (WALL MICHAEL L [US] ET AL) 7 April 2022 (2022-04-07) * paragraph [0034] - paragraph [0085]; figures 1A, 1B, 5 * | 1-15 | |
| A | PATRICK GEL{\SS} ET AL: "Low-rank tensor decompositions of quantum circuits", ARXIV.ORG, CORNELL UNIVERSITY LIBRARY, 201 OLIN LIBRARY CORNELL UNIVERSITY ITHACA, NY 14853, 2 January 2023 (2023-01-02), XP091406085, * abstract; Sections 1-5 * | 1-15 | **TECHNICAL FIELDS SEARCHED (IPC)** G06N |

The present search report has been drawn up for all claims

| Place of search | Date of completion of the search | Examiner |
|---|---|---|
| The Hague | 18 January 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**           EP 23 18 8760

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | Publication date | Patent family member(s) | Publication date |
|---|---|---|---|
| US 2022108218 A1 | 07-04-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHENDE et al.** Minimal universal two-qubit controlled-not-based circuits. *Phys. Rev. A*, June 2004, vol. 69, 062321

- **LUBASCH et al.** *Variational quantum algorithms for nonlinear problems*
- **SHENDE et al.** Minimal universal two-qubit controlled-not-based circuits. *Phys. Rev. A*, 2004